# FASCICULE DE BREVET EUROPEEN

(11) **EP 1 957 294 B1**
(45) Date de publication et mention de la délivrance du brevet: **10.08.2016**
(21) Numéro de dépôt: 06842103.1
(22) Date de dépôt: 06.12.2006
(51) Int. Cl.: B60C 23/04

(54) **PROCEDE POUR ETABLIR UN DIAGNOSTIC AU MOYEN D'UN SYSTEME DE SURVEILLANCE DE LA PRESSION DES PNEUMATIQUES D'UN VEHICULE AUTOMOBILE**
DIAGNOSEVERFAHREN FÜR EIN SYSTEM ZUR ÜBERWACHUNG DES DRUCKS IN KRAFTFAHRZEUGREIFEN
METHOD OF DIAGNOSIS FOR A SYSTEM FOR MONITORING A PRESSURE IN MOTOR VEHICLE TYRES

(30) Priorité: 09.12.2005 FR 0512519
(43) Date de publication de la demande: 20.08.2008
(73) Titulaire: Renault SAS, 92100 Boulogne Billancourt (FR); Continental Automotive France, 31036 Toulouse (FR)
(72) Inventeur: CALDICHOURY, Anne, F-92210 Saint-Cloud (FR); COSTES, Olivier, F-31270 Cugnaux (FR)
(74) Mandataire: Dossmann, Gérard
(86) Numéro de dépôt international: PCT/FR2006/051292
(87) Numéro de publication internationale: WO 2007/066043

(56) Documents cités:
- DE-A1- 10 058 099
- FR-A- 2 746 350
- FR-A1- 2 829 424
- US-A- 5 559 484

## Description

La présente invention concerne un procédé pour établir un diagnostic au moyen d' un système de surveillance de la pression des pneumatique d' un véhicule automobile.

Un système de surveillance est notamment décrit dans la demande de brevet français publiée sous le numéro FR 2 819 613.

On pourra également se référer au document FR 2 746 350 qui décrit un système de surveillance de la pression des pneumatiques d'un véhicule automobile capable de transmettre au conducteur du véhicule une alerte en cas de pression anormale.

Le document FR 2 829 424 décrit également un dispositif de surveillance de la pression d'air d'un pneumatique dans lequel on calcule la pression d'air à partir d'un paramètre ayant une influence sur la pression du pneumatique.

Les systèmes de surveillance de la pression des pneumatiques connus ont pour fonction de surveiller la pression de chaque roue et d'alerter le conducteur en cas de mauvaise pression d'une des roues (sous gonflage, roue crevée, sur gonflage,. ..,).

Un système complet est constitué de
- quatre unités roues qui mesurent et envoient par ondes RF (Radio Fréquence) leur pression et leur température, et
- un calculateur qui traite ces données et alerte le conducteur en cas de pression anormale des roues.

Dans ce type de système, l'une des fonctions demandée est d'assurer un diagnostic du système. On entend ici par « diagnostic » un moyen d'analyser les défauts du système en après-vente c'est-à-dire dans un garage ou dans un bureau d'études du constructeur.

Actuellement, le diagnostic associé au système de surveillance de la pression des pneumatiques reste limité à la nature des défauts de fonctionnement du système.

Le but de la présente invention est de remédier à cet inconvénient.

L'invention a donc pour objet un procédé pour établir un diagnostic au moyen d'un système de surveillance de la pression des pneumatiques d'un véhicule automobile, tel que défini à la revendication 1. Des caractéristiques additionnelles avantageuses du procédé conforme à l'invention sont spécifiées aux revendications dépendantes.

Le système ainsi proposé permet aussi une analyse approfondie a posteriori des défauts relatifs à de fausses alertes (fausse alerte crevaison, fausse alerte sous gonflage,...).

Par ailleurs, le procédé proposé permet également d'analyser le contexte associé à une alerte de pression en vue d'adapter l'intervention après-vente.

La solution présentée n'est pas restrictive et peut s'étendre à tout type d'alerte pression (sous gonflage, crevaison, sur gonflage, fuite, déséquilibre de pression, pression inadaptée à la vitesse, ...).

L'invention sera mieux comprise à l'aide de la description qui va suivre, donnée uniquement à titre d'exemple et faite en référence aux dessins annexés dans lesquels :
- la figure 1 représente schématiquement la structure d'un système de surveillance de la pression des pneumatiques d'un véhicule automobile,
- la figure 2 représente les étapes successives d'un procédé pour établir un diagnostic, selon l'invention.

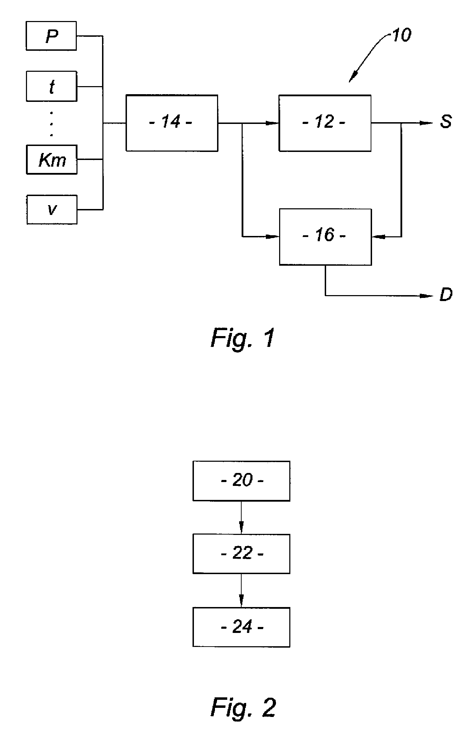

Sur la figure 1, la référence 10 désigne globalement un système de surveillance de la pression des pneumatiques d'un véhicule automobile. Ce système 10 comprend essentiellement un calculateur 12 recevant des données d'entrée P, t, Km, V via un module 14 de transmission de ces données, adapté pour transmettre à un conducteur du véhicule automobile une information d'alerte S en cas de pression anormale d'au moins un pneumatique.

Le calculateur 12 peut être du même type que celui décrit dans FR 2 819 613.

L'information d'alerte peut être affichée sur le tableau de bord ou être transmise au conducteur sous forme de signal sonore.

L'affichage peut par exemple indiquer la valeur de la pression anormale accompagnée d'un chiffre ou d'une lettre désignant le pneumatique ayant une pression anormale.

Les données d'entrée du système peuvent comprendre, outre la pression P, la distance Km (kilométrage) parcourue par le ou les pneumatiques et, de façon optionnelle, une mesure t de la température des pneumatiques et la vitesse V du véhicule.

Le système de surveillance 10 comprend en outre une unité 16 adaptée pour enregistrer les données d'entrée P, t, Km, V du système, en cas de transmission d'une information d'alerte, c'est-à-dire la pression P, la distance Km et de façon optionnelle la température t et la vitesse V.

Les données ainsi enregistrées sont accessibles pour établir un diagnostic D pour identifier les données qui ont conduit à une information d'alerte.

Ce diagnostic D est effectué dans un garage ou dans un bureau d'étude en branchant un appareil tel qu'un ordinateur à la sortie de l'unité d'enregistrement 16. Au moyen de cet appareil, on pourra ainsi lire les données, c'est-à-dire, la valeur de la pression d'un pneumatique, la température, la vitesse du véhicule qui ont déclenché l'alerte, ainsi que le kilométrage parcouru par le pneumatique.

L'opérateur pourra ainsi déterminer si ces valeurs correspondent ou non à des valeurs anormales c'est-à-dire suffisamment différentes de valeurs de référence. L'opérateur pourra ainsi vérifier si le déclenchement de l'alerte était ou non justifié.

Pour avoir une vision complète a posteriori de la situation ayant conduit à une alerte, les données d'entrée sont enregistrées en permanence, c'est-à-dire avant et après le déclenchement de l'alerte.

Lors du diagnostic, on pourra vérifier l'évolution des données au cours du temps. Il sera ainsi possible de vérifier si la ou les données responsables de l'alerte, ont évolué progressivement ou brusquement au cours du temps, si elles se sont dégradées après l'alerte ou au contraire si elles sont redevenues normales après le déclenchement de l'alerte.

Le procédé mis en oeuvre pour établir ce diagnostic D est illustré sur la figure 2.

Lors d'une première étape 20, on lit les données d'entrée enregistrées dans l'unité d'enregistrement 16. Ensuite, lors d'une étape 22, on identifie la ou les données responsables du déclenchement de l'alerte S, puis on examine lors d'une dernière étape 24 l'évolution des données au cours du temps avant et/ou après le déclenchement de l'alerte.

A titre d'exemple, le tableau ci-après, montre un enregistrement des valeurs de pression d'un pneumatique relevées avant et après le déclenchement d'une alerte à un instant a.

| Temps | Pression |
|---|---|
| a-2 | 2 bar |
| a-1 | 2 bar |
| a | 1,5 bar → alerte S |
| a+1 | 2 bar |
| a+2 | 2 bar |

Dans cet exemple, l'alerte S a été déclenchée au temps a du fait d'une pression égale à 1,5 bar qui a chuté brusquement par rapport à la valeur normale de 2 bar relevée aux temps a-2 et a-1.

L'exemple ci-dessus montre également que les pressions enregistrées après l'alerte sont redevenues normales.

Le diagnostic peut donc conclure dans cet exemple, à l'enregistrement d'une valeur de pression erronée à l'instant a ou due à un événement particulier tel qu'un choc appliqué sur le pneumatique. On peut donc dans ce cas conclure à une fausse alerte.

La lecture des données enregistrées permet ainsi d'établir un diagnostic sur la cause du déclenchement de l'alerte telle qu'un sous gonflage d'un pneumatique, une crevaison, une fuite, un déséquilibre de pression, une pression inadaptée à la vitesse, etc.

Les données peuvent être enregistrées dans une mémoire volatile ou permanente avec une sauvegarde des données même en cas de déconnection de toutes les alimentations électriques du véhicule.

Par ailleurs, plusieurs jeux de données associés à différentes alertes peuvent être empilés.

Autrement dit, plusieurs alertes avec leur contexte de données respectives peuvent être enregistrées dans la mémoire pour affiner le diagnostic.

Bien entendu, d'autres données que celles mentionnées ci-dessus peuvent être enregistrées, telles que le mode de fonctionnement de chaque roue, l'accélération ou la décélération de chaque roue, etc.

Globalement, les principaux avantages du système décrit précédemment sont les suivants :
- il permet d'analyser d'éventuels dysfonctionnements, en particulier, d'identifier des fausses alertes,
- il permet de dissocier les origines des alertes,
- il permet d'effectuer une analyse fine permettant au service après-vente de ne changer que la pièce que le diagnostic a mis en cause.

## Revendications

1. Procédé pour établir un diagnostic au moyen d'un système (10) de surveillance de la pression des pneumatiques d'un véhicule automobile, comportant un calculateur (12) adapté pour recevoir des données d'entrée comportant au moins une pression (P) des pneumatiques et pour transmettre à un conducteur du véhicule une alerte (S) en cas de pression anormale d'au moins un pneumatique, et une unité d'enregistrement (16) adaptée pour enregistrer les données d'entrée (P, t, Km, V) du système de surveillance (10), en cas de transmission de l'alerte (S) au conducteur, les données enregistrées dans cette unité d'enregistrement (16) étant accessibles pour établir un diagnostic, **caractérisé en ce qu'**on lit (20) les données d'entrée enregistrées dans l'unité d'enregistrement (16), on identifie (22) la ou les données responsables du déclenchement de l'alerte (S) on examine (24) l'évolution des données au cours du temps avant et/ou après le déclenchement de l'alerte, et on vérifie si l'alerte était justifiée ou non justifiée.

2. Procédé selon la revendication 1, dans lequel l'unité d'enregistrement (16) est également adaptée pour enregistrer les données d'entrée, avant et après la transmission de l'alerte au conducteur.

3. Procédé selon l'une des revendications 1 ou 2, dans lequel les données d'entrée reçues par le système de surveillance (10) comportent la pression (P) des pneumatiques et un kilométrage parcouru (Km).

4. Procédé selon la revendication 3, dans lequel les données d'entrée reçues par le système de surveillance (10) comportent en outre une mesure (t) de température des pneumatiques et une mesure (V) de la vitesse du véhicule automobile.

## Patentansprüche

1. Verfahren zum Erstellen einer Diagnose mittels eines Systems (10) zum Überwachen des Drucks von Luftreifen eines Kraftfahrzeugs, das einen Rechner (12), der dafür ausgelegt ist, Eingangsdaten zu empfangen, die wenigstens einen Druck (P) der Luftreifen enthalten, und im Fall eines anomalen Drucks wenigstens eines Luftreifens eine Warnung (S) an einen Fahrer des Fahrzeugs zu übertragen, und eine Aufzeichnungseinheit (16), die dafür ausgelegt ist, im Fall der Übertragung der Warnung (S) an den Fahrer die Eingangsdaten (P, t, Km, V) des Überwachungssystems (10) aufzuzeichnen, umfasst, wobei auf die in diese Aufzeichnungseinheit (16) aufgezeichneten Daten zugegriffen werden kann, um eine Diagnose zu erstellen, **dadurch gekennzeichnet, dass** die in die Aufzeichnungseinheit (16) aufgezeichneten Eingangsdaten gelesen werden (20), dass die Daten, die für die Auslösung des Alarms (S) verantwortlich sind, identifiziert werden (22), dass die Entwicklung der Daten im zeitlichen Verlauf vor und/oder nach dem Auslösen der Warnung untersucht werden (24) und dass geprüft wird, ob die Warnung berechtigt oder nicht berechtigt war

2. Verfahren nach Anspruch 1, wobei die Aufzeichnungseinheit (16) außerdem dafür ausgelegt ist, die Eingangsdaten vor und nach der Übertragung der Warnung an den Fahrer aufzuzeichnen.

3. Verfahren nach einem der Ansprüche 1 oder 2, wobei die von dem Überwachungssystem (10) empfangenen Eingangsdaten den Druck (P) der Luftreifen und eine gefahrene Strecke (Km) enthalten.

4. Verfahren nach Anspruch 3, wobei die von dem Überwachungssystem (10) empfangenen Eingangsdaten außerdem eine Messung (t) der Temperatur der Luftreifen und eine Messung (V) der Geschwindigkeit des Kraftfahrzeugs enthalten.

## Claims

1. Method for establishing a diagnosis by means of a system (10) for monitoring the tyre pressures of a motor vehicle, comprising a computer (12) designed to receive input data comprising at least a tyre pressure (P) and to transmit to a driver of the vehicle a warning (S) if at least one tyre exhibits an abnormal pressure, and a recording unit (16) designed to record the input data (P, t, Km, V) of the monitoring system (10), if the warning (S) is transmitted to the driver, the data recorded in this recording unit (16) being accessible in order to establish the diagnosis, **characterized in that** the input data recorded in the recording unit (16) are read (20), the datum or data responsible for triggering the warming (S) is or are identified (22), and the change in data over time before and/or after the triggering of the warning is examined (24) and a check is made to determine whether or not the warning was justified.

2. Method according to Claim 1, in which the recording unit (16) is also designed to record the input data before and after the transmission of the warning to the driver.

3. Method according to one of Claims 1 and 2, in which the input data received by the monitoring system (10) comprise the tyre pressure (P) and the distance covered (Km).

4. Method according to Claim 3, in which the input data received by the monitoring system (10) further comprise a tyre temperature measurement (t) and a measurement (V) of the speed of the motor vehicle,
